(19) **Europäisches Patentamt** / **European Patent Office** / **Office européen des brevets**

(11) **EP 2 063 324 B1**

(12) **EUROPEAN PATENT SPECIFICATION**

(45) Date of publication and mention
of the grant of the patent:
**21.03.2012 Bulletin 2012/12**

(21) Application number: **07806612.3**

(22) Date of filing: **03.09.2007**

(51) Int Cl.:
***G03H 1/02*** *(2006.01)*     ***G11B 7/244*** *(2006.01)*

(86) International application number:
**PCT/JP2007/067139**

(87) International publication number:
**WO 2008/029765 (13.03.2008 Gazette 2008/11)**

(54) **VOLUME HOLOGRAM OPTICAL RECORDING MEDIUM, COMPOSITION FOR FORMING VOLUME HOLOGRAM RECORDING LAYER, VOLUME HOLOGRAM RECORDING MATERIAL, AND VOLUME HOLOGRAM OPTICAL RECORDING METHOD**

OPTISCHES VOLUMENHOLOGRAMMAUFZEICHNUNGSMEDIUM, VERBINDUNG ZUR BILDUNG EINER VOLUMENHOLOGRAMMAUFZEICHNUNGSSCHICHT, VOLUMENHOLOGRAMMAUFZEICHNUNGSMATERIAL UND OPTISCHES VOLUMENHOLOGRAMMAUFZEICHNUNGSVERFAHREN

SUPPORT D'ENREGISTREMENT OPTIQUE D'HOLOGRAMME VOLUMIQUE, COMPOSITION POUR FABRIQUER UNE COUCHE D'ENREGISTREMENT D'HOLOGRAMME VOLUMIQUE, MATÉRIAU D'ENREGISTREMENT D'HOLOGRAMME VOLUMIQUE ET PROCÉDÉ D'ENREGISTREMENT OPTIQUE D'HOLOGRAMME VOLUMIQUE

(84) Designated Contracting States:
**DE**

(30) Priority: **05.09.2006  JP 2006240368**

(43) Date of publication of application:
**27.05.2009  Bulletin 2009/22**

(73) Proprietor: **Mitsubishi Chemical Corporation
Tokyo 108-0014 (JP)**

(72) Inventors:
• **MIKI, Yasuaki
  Kanagawa 227-8502 (JP)**

• **ITOH, Hideaki
  Tokyo 131-0033 (JP)**

(74) Representative: **HOFFMANN EITLE
Patent- und Rechtsanwälte
Arabellastraße 4
81925 München (DE)**

(56) References cited:
WO-A1-98/04601         WO-A1-03/023519
WO-A1-2005/078532    JP-A- 04 174 886
JP-A- 09 101 736        JP-A- 2005 502 918
JP-A- 2006 154 083     JP-A- 2007 241 144
US-A1- 2006 115 740

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a volume hologram optical recording medium and the like. More specifically it relates to a volume hologram optical recording medium that records three-dimensional information by plural coherent light irradiation.

Background Art

In recent years, in an effort aiming at an optical recording medium having a still larger recording capacity and density, a volume hologram optical recording medium has been developed, which records information as a hologram by changing the refractive index of a recording layer in accordance with an optical intensity distribution generated by the interference of light.

The general principle about forming a hologram is described in several technical documents or books (see Non-Patent Document 1). According to these, an object to be recorded is irradiated with one of two coherent laser beams of light, while a photosensitive hologram recording material is placed at the position where the laser beam is receivable.

A hologram recording material is irradiated with a direct coherent light which does not illuminate the object, in addition to a light from an object. The light from the object is called an object light, and the light that directly illuminates the recording material is called a reference light. On the hologram recording material, interference stripes between the reference light and the object light is recorded as image information. Then, when the recording material treated as above is irradiated with the same light (reproduction illumination light) as the reference light, the light is diffracted by holograms in a manner that the wave surface of the reflected light, which has originally arrived at the recording material from the object in the recording step, is reproduced. As a result, an object image similar to the real image of the object is observable three-dimensionally.

A hologram formed by irradiating the hologram recording material with the reference light and object light from the same direction is called a transmission hologram, while a hologram formed by irradiating the recording material with the reference light and the object light from an opposite direction is called a reflection hologram.

A hologram having a sufficient film thickness with respect to the spacing of the interference stripes (usually 5 times or more of the spacing of the interference stripes or a thickness of about 1 $\mu$m or more) is called a volume hologram. A higher recording density is attainable with a thicker film, because the recording is performed toward the film thickness direction with the volume hologram.

An example of known recording materials for a volume phase hologram is a write-once type hologram that does not need wet processes or bleaching processes. The composition thereof is usually a resin matrix with an photosensitive compound incorporated. Examples thereof include a photopolymer system that is a combination of a resin matrix and radical or cation polymerizable monomers (see Patent Documents 1 to 4).

When information is recorded, a recording layer is irradiated with the object light along with the reference light so as to make the object light and the reference light interfere with each other at the recording layer. At this time, the resultant interfering light induces some changes of the photosensitive compound contained in the recording layer. For example, when the photosensitive compound is a polymerizable monomer, polymerization initiates with the initiation of the polymerization, a concentration gradient of the photosensitive compound develops and the photosensitive compound moves by diffusion from a weakly irradiated portion to a strongly irradiated portion.

As a result, owing to the concentration difference of the photosensitive compound in the recording layer, a refractive index difference develops in the recording layer, so that the interference stripes recorded in the recording layer is recorded as a hologram. As the refractive index difference in the recording layer is larger, larger diffraction efficiency is obtained. Therefore, in order to enhance the difference of the refractive index, attempts have been made to use a compound having an aromatic ring, a heterocyclic ring, chlorine, bromine or the like for either one of the resin matrix or the photosensitive compound.

Non-patent document 1: "HOLOGRAPHIC DISPLAY", section 2, written by Junpei Tujiuchi, published by Sangyo Tosho
Patent document 1: Japanese Patent No. 3737306
Patent document 2: Japanese Patent No. 3645480
Patent document 3: Japanese Patent Application Laid Open Publication No. 2005-43862
Patent document 4: Published Japanese Translation of a PCT Patent Application No. 2005-502918

US 2006/0115740 A1 relates to a hologram recording medium having a recording layer between a first and a second translucent substrate and the recording layer comprises a three-dimensionally cross-linked polymer matrix, a radically polymerizable compound, and an polymerization initiator, while the recording layer shows a rubber-like elasticity and has a durometer hardness of A45 to A85.

Disclosure of the Invention

Problems to be Solved by the Invention

As a method for forming the resin matrix, there may be various methods. Examples thereof include a stepwise polymerization of isocyanate group and hydroxyl group (urethane formation), a stepwise polymerization of isocyanate group and amine group (urea formation), a cationic epoxy polymerization, a cationic vinylether polymerization, a cationic alkenylether polymerization, a stepwise polymerization of epoxy group and amine group, and a stepwise polymerization of epoxy group and mercaptan group.

As the resin matrix, a synthetic resin that contains a polyether structure is often used considering the compatibility with the photosensitive compound before photo reaction and the compatibility with a polymer that is obtained from the photosensitive compound after photo reaction. However, as described in the examples of Patent Document 1, practically a synthetic resin with an alkylene oxide structure having 1 to 3 carbon atoms is used as a primary component in many cases. Patent Document 2, which was filed later, describes that the resin matrix described in the examples of Patent Document 1 has a problem of limiting the shelf life thereof because the resin matrix is likely to absorb moisture during storage and the refractive index thereof spatially unevenly changes by swelling.

For this reason, in Patent Document 2, a method of packing the recording layer inside of glass plates and sealing the periphery thereof with a moisture-proof sealant is disclosed. However, there is no description about the improvement of the material for the recording layer.

In an optical information recording medium, the information recording performance after the medium is stored over a long time (shelf life) and the storage stability of the recorded information (archival life) are particularly important issues, but there is not any specific description about these issues from the viewpoint of the material of the recording layer.

The present invention has been made in view of the above circumstances.

Namely, it is an object of the present invention to provide a volume hologram optical recording medium having a recording layer with low moisture absorption.

It is another object of the present invention to provide a composition for forming volume hologram recording layer that has low moisture absorption, excellent storage stability, and excellent compatibility with other components.

It is still another object of the present invention to provide a volume hologram recording material.

It is still another object of the present invention to provide a volume hologram optical recording method.

Means for Solving the Problems

The present inventors have made intensive studies to address the above problems. As a result, it has been found that a volume hologram optical recording medium having excellent storage stability and excellent compatibility with other components is obtained when the moisture absorption rate of the formed recording layer is 1.5 wt% or less.

The reason for the above is considered as follows. When the moisture absorption rate of the formed recording layer is 1.5 wt% or less, the amount of water incorporated in the matrix is small, so that the lowering of the glass transition temperature (Tg) of the matrix, as well as the change of the morphology, is not likely to occur. Therefore, it is considered that an initial state of uniform incorporation and dispersion of the photosensitive compound in the resin matrix is maintained, thereby allowing information to be recorded with high sensitivity and high accuracy even if the medium is stored over a long time.

In addition, because the photosensitive compound moves little after recording, the recorded information is considered to exhibit excellent storage stability. Further, when the moisture absorption rate is low, the recording layer itself swells little, so that the spatial change of the refractive index is not likely to occur, thereby maintaining a uniform state and not impairing optical quality. Further, the influence on a visible light polymerization initiator is reduced, so that recording is considered to be performed with a high sensitivity.

Such a volume hologram optical recording medium has been found to be attained by incorporating a resin matrix (A) and/or a resin matrix (B) and a photosensitive compound (C) in the recording layer; further reducing the concentration of hydrophilic functional groups or the like contained in the recording layer; incorporating an additive having a hydrophobic structure; and the like. Based on this finding, the present invention has been accomplished.

Here, the resin matrix (A) is obtained by reacting a polyisocyanate (A1) and a polyol (A2) having -(C=O)O- group and/or -O(C=O)O- group. The resin matrix (B) is obtained by reacting an epoxy compound (B1) having two epoxy groups or more in one molecule with a curing agent (B2).

In other words, according to the present invention, there is provided a volume hologram optical recording medium including: a multi-layer structure having at least a transparent substrate and a recording layer composed by containing a synthetic resin. Three-dimensional information recording is performed with interference stripes formed in the recording layer by being irradiated with a plurality of coherent lights, and a moisture absorption rate of the recording layer formed is 1.5 wt% or less.

In the volume hologram optical recording medium to which the present invention is applied, it is preferable that the recording layer includes: a resin matrix (A) and/or a resin matrix (B) and a photosensitive compound (C), the resin matrix (A) is obtained by reacting a polyisocyanate (A1) with a polyol (A2) having -(C=O)O- group and/or -O(C=O)O- group, and the resin matrix (B) is obtained by reacting an epoxy compound (B1) having two epoxy groups or more in one molecule with a curing agent (B2).

Further, it is preferable that the polyisocyanate (A1) has three isocyanate groups or more in one molecule.

Furthermore, in the resin matrix (B), it is preferable that the epoxy compound (B1) has an alkylene oxide having from 4 carbon atoms to 10 carbon atoms.

Still furthermore, in the resin matrix (B), it is preferable that the curing agent (B2) is at least any one kind selected from a group containing amines, acid anhydrides, thiols, anion polymerization initiators and cation polymerization initiators.

Still furthermore, it is preferable that the photosensitive compound (C) is a radical polymerizable monomer. Here, the ratio of the photosensitive compound (C) is preferably from 0.5 parts by weight to 100 parts by weight, with respect to 100 parts by weight of either the resin matrix (A) or the resin matrix (B), or with respect to 100 parts by weight of a total amount ((A)+(B)) of the resin matrix (A) and the resin matrix (B).

Next, according to the present invention, there is provided a composition for forming a volume hologram recording layer used for a volume hologram optical recording medium, including: 100 parts by weight of a synthetic resin containing a resin matrix (A) and/or a resin matrix (B) ; and from 0.5 parts by weight to 100 parts by weight of a photosensitive compound (C). The resin matrix (A) is obtained by reacting a polyisocyanate (A1) with a polyol (A2) having -(C=O)O- group and/or -O(C=O)O- group, and the resin matrix (B) is obtained by reacting an epoxy compound (B1) having two epoxy groups or more in one molecule with a curing agent (B2).

Further, according to the present invention, there is provided a volume hologram recording material comprising at least the composition for forming the volume hologram recording layer according to claim 8.

Furthermore, according to the present invention, there is provided a volume hologram optical recording method with an excitation light and a reference light so as to record a volume hologram in the recording layer by the interference of the excitation light and the reference light.

Advantages of the Invention

According to the present invention, a volume hologram optical recording medium having a recording layer with low moisture absorption and excellent storage stability is obtainable.

Best Modes for carrying out the Invention

Hereinafter, best modes (exemplary embodiments) for carrying out the present invention will be described. Note that the following description is an example (an illustrative example) of the exemplary embodiments of the present invention. The present invention is not limited to the following exemplary embodiments, and the present invention may be executed in various manners within the scope thereof. Further, the figures used herein are used to explain the present exemplary embodiments and show in no way actual dimensions.

A volume hologram optical recording medium to which the present exemplary embodiment is applied is provided with a multi-layer structure that includes at least a transparent substrate and a recording layer composed by containing a synthetic resin. A moisture absorption rate of the recording layer formed is 1.5 wt% or less.

The moisture absorption rate of the recording layer formed in the present exemplary embodiments is evaluated in the form of a 500 μm thick film peeled off from the substrate. The moisture absorption rate (%) is calculated in accordance with the following equation,

$$\text{Moisture Absorption Rate (\%)} = [((W2) - (W1)) / W1] \times 100$$

$$(\text{unit: \%})$$

using the weight W1 (measured at 23°C and 50% RH) of the recording layer just after preparation, i.e., before absorbing moisture, and the weight W2 of the recording layer measured immediately after stored in an environment of 60°C and 90%RH for 24 hours.

Note that the water content of the recording layer formed under the present condition reaches saturation. When the moisture absorption rate obtained by using the present evaluation method exceeds 1.5 wt%, the information recording performance after the medium is stored over a long time (shelf life) and the storage stability of recorded information (archival life) are degraded with time. Meanwhile, with the moisture absorption rate of 1.5 wt% or less, the medium exhibits excellent performance as a hologram recording medium.

In the following description, "these derivatives" denote compounds that are obtained by substituting a part of the structure of an exemplified compound with another structure within the scope of the present invention.

Further, in the following description, the term "(meth)acrylic acid" collectively indicates acrylic acid and methacrylic acid. To the terms of "(meth)acrylamide," "(meth)acrylate," and the like, the similar manner is applied.

[I. Composition for forming volume hologram recording layer]

A composition for forming the volume hologram recording layer in the present exemplary embodiments has such a property that the weight increase (moisture absorption rate) of a 500 $\mu$m thick recording layer formed on a substrate and made of the composition, after peeling off therefrom followed by saturating with moisture in an environment of 60 °C and 90%RH, is 1.5 wt% or less with respect to the initial weight.

Examples of the composition for forming the volume hologram recording layer includes the one that is explained below and contains at least, a resin matrix (A) and/or a resin matrix (B) (hereinafter, described simply as "resin matrix (es)" in some cases) and a photosensitive compound (C).

In order to keep the moisture absorption rate of the recording layer at 1.5 wt% or less, it is preferable that a polyol having a structure of -(C=O)O- or -O(C=O)O- and a relatively hydrophobic property is incorporated in the components forming the matrix of the recording layer.

Besides the above, the moisture absorption rate of the recording layer may be reduced also by employing a measure such as decreasing the concentration of hydrophilic functional groups in the components forming the matrix of the recording layer or incorporating into the recording layer an additive or the like that has a hydrophobic structure, as needed. In this case, examples of the hydrophilic functional groups may include functional groups and structures such as urethane bonding, urea bonding, hydroxyl group, amino group, carboxyl group, ethylene glycol residue, or propylene glycol residue. Examples of the hydrophobic structures may include hydrocarbon groups such as cyclic or non-cyclic alkyl or alkylene groups having 4 or more carbon atoms; fluorine atom containing structures such as a perfluoroalkyl structure or a perfluoroalkylene structure; and a siloxane structure.

Examples of the specific measures to reduce the concentration of hydrophilic functional groups in the matrix may include forming the matrix by using a polyol and a polyisocyanate of a relatively high molecular weight and decreasing the number of functional groups in one molecule contained in the polyol and polyisocyanate and as a result reducing the concentration of urethane bonding in the matrix.

In addition, the concentration of hydrophilic functional groups in the matrix may be reduced also by decreasing remaining hydroxyl group, isocyanate group, epoxy group (or hydroxyl group that is generated by ring-opening of an epoxy group), or the like when the matrix is formed.

In some cases, excess isocyanate group that remains unreacted in the matrix may react with water or the like in the air and generate urea bonding or the like after the recording layer is formed. Since the urea bonding itself is a highly hydrophilic functional group, it is not desirable that such functional group exists in a large amount in the recording layer from the viewpoint of reducing the moisture absorption rate. It is also not desirable that unreacted hydroxyl group or the like remains in a large amount in the recording layer, because the moisture absorption rate increases.

Considering the above, in order to reduce the moisture absorption rate of the recording layer, it is extremely effective to use a polyol having a structure of - (C=O)O- or -O(C=O)O- as the polyol that forms the matrix. By regulating these factors adequately, the moisture absorption rate of the recording layer can be kept at 1.5% or less.

Note that the refractive index of the photosensitive compound (C) further increases by polymerization as compared with before polymerization. Therefore, it is desirable that the resin matrices are designed so as to have a refractive index lower than the refractive index of the photosensitive compound (C). Therefore, as the photosensitive compound (C), a compound having an aromatic ring, a heterocyclic ring, an alicyclic structure, bromine, chlorine or the like that has a relatively high refractive index is preferable. On the other hand, the resin matrices are preferably designed so as not to have the structures described above, because larger difference in the refractive indexes between the resin matrices and the photosensitive compound (C) gives larger diffraction efficiency.

[I-1. Resin Matrix (A)]

In the present exemplary embodiments, the resin matrix (A) used for the composition for forming the volume hologram recording layer preferably contains at least a polyisocyanate (A1) and a polyol (A2) that has -(C=O)O- group and/or- O(C=O)O- group.

Note that, hereinafter, the polyol (A2) that has -(C=O)O- group and/or -O(C=O)O- group is simply described as polyol (A2) in some cases.

<I-1-1. Polyisocyanate (A1)>

The polyisocyanate (A1) used for the resin matrix (A) is not particularly limited on the kind thereof as long as the polyisocyanate (A1) has two or more isocyanate groups in one molecule.
The number of the isocyanate groups that the polyisocyanate (A1) possesses is usually not particularly limited as long as the number is 2 or more, particularly preferably 3 or more. When the number of the isocyanate groups is excessively small, hardness required for the matrix is sometimes not obtained. When the number of the isocyanate groups is excessively large, the recording sensitivity is likely to increase. The upper limit of the number of the isocyanate groups is not particularly limited, but usually the number of the isocyanate groups is about 20 or less in one molecule of the polyisocyanate (A1). Regarding the range of the content of the isocyanate group (NCO %) contained in the polyisocyanate (A1), a polyisocyanate (A1) having the range of from 1% to 80% is usually used and preferably the one having the range of from 3% to 60% is used.

Examples of the polyisocyanate (A1) used in the present exemplary embodiments may include an aliphatic isocyanate such as hexamethylene diisocyanate, lysine methylester diisocyanate, or 2,4,4-trimethyl hexamethylene diisocyanate; an alicyclic isocyanate such as isophorone diisocyanate or 4,4'-methylene bis(cyclohexyl isocyanate); an aromatic isocyanate such as tolylene diisocyanate, 4,4'-diphenylmethane diisocyanate, xylylene diisocyanate, or naphthalene-1,5'-diisocyanate; and the multimers thereof. As the multimers, the trimers to heptamers thereof are preferable. In addition, the reaction products with a polyhydric alcohol such as water, trimethylol ethane, or trimethylol propane may be included. The multimers or derivatives of hexamethylene diisocyanate are particularly preferable.

Further, multi-functional polyisocyanate (prepolymer) or the like having terminal isocyanate groups may be also used by allowing the above isocyanates to react with "a compound having two or more active hydrogen groups in one molecule" to substantially remove unreacted isocyanates.

Examples of "the compound having two or more active hydrogens in one molecule" may include ethylene glycol, propylene glycol, 1,4-butane diol, 1,5-pentane diol, 3-methyl-1,5-pentane diol, 1,6-hexane diol, neopentyl glycol, diethylene glycol, 1,4-cyclohexane diol, 1,4-cyclohexane dimethanol, decamethylene glycol, polyethylene glycol, polytetramethylene glycol, ethylenediamine, propylenediamine, isophoronediamine, 4,4'-diaminodicyclohexyl methane, 2,2,4-trimethylhexamethylene diamine, and 1,4-diaminocyclohexane.

In addition, a polycaprolactone polyol or polyester polyol that contains -(C=O)O- group, a polycarbonate polyol that contains -O(C=O)O- group, or the like may be also used.

Among these polyisocyanates, commercially available ones include, for example, VESTANAT H12MDI, HB2640, HT2500, T1890, and T1890/100 (trade names, all of them manufactured by Degussa Corp.); DURANATE 24A-100, TPA-100, TSA-100, THA-100, P-301-75E, D-101, D-201, and 50M (trade names, all of them manufactured by Asahi Kasei Chemicals Corp.) ; MONDUR ML, MONDUR TD, and DESMONDUR N3200 (trade names, all of them manufactured by Bayer Corp.) ; and COSMONATE T-80, T-65, T-100, M-100, M-200, PH, LK and others (trade names, all of them manufactured by Mitsui Chemicals Polyurethanes, Inc.).

Regarding the molecular weight of the polyisocyanate, the number average molecular weight thereof is preferably 100 or more and 50,000 or less, more preferably 150 or more and 10, 000 or less, and still more preferably 150 or more and 5, 000 or less. When the number average molecular weight is excessively small, the hardness of the matrix becomes too high because the crosslinking density increases, thereby possibly lowering recording speed. On the other hand, when the number average molecular weight is excessively large, the hardness of the matrix becomes too low because the compatibility with other components lowers or the crosslinking density lowers, thereby the recorded content disappears in some cases.
Note that the polyisocyanate (A1) may contain other constituent elements besides isocyanate group as long as the effect of the present invention is not impaired markedly.

<I-1-2. Polyol (A2) having -(C=O)O- group and/or -O(C=O)O-group >

The polyol (A2) that is used for the resin matrix (A) and has -(C=O)O- group and/or -O(C=O)O- group is not particularly limited on the kind thereof as long as the polyol (A2) has two or more hydroxyl groups in one molecule and also has -(C=O)O- group and/or -O(C=O)O- group.

The number of hydroxyl groups that the polyol (A2) having -(C=O)O- group and/or -O(C=O)O- group group possesses is usually not particularly limited as long as the number is two or more. When the number of the hydroxyl groups is small, hardness required for the matrix is not obtained in some cases.
On the other hand, the upper limit of the number of the hydroxyl groups is not particularly limited, but usually 5 or less is preferable. When the hydroxyl groups remain in a large number in the matrix, the moisture absorption of the matrix becomes high, thereby affecting the storage stability of recording in some cases.

Examples of the polyol (A2) having -(C=O)O- group and/or -O(C=O)O- group may include polycaprolactone polyol, polyester polyol, and polycarbonate polyol.

Polycaprolactone polyol is obtained by a reaction between lactone and diol or polyhydric alcohol.

Examples of the lactone may include α-caprolactone, β-caprolactone, γ-caprolactone, ε-caprolactone, α-methyl-ε-caprolactone, and β-methyl-ε-caprolactone.

Examples of the diol or polyhydric alcohol may include ethylene glycol, propylene glycol, 1,4-butane diol, 1,5-pentane diol, 3-methyl-1,5-pentane diol, 1,6-hexane diol, neopentyl glycol, diethylene glycol, 1,4-cyclohexane diol, 1,4-cyclohexane dimethanol, decamethylene glycol, polyethylene glycol, and polytetramethylene glycol.

Examples of commercially available polycaprolactone polyol obtained by a reaction with ε-caprolactone include Placcel 205, Placcel 210, Placcel 220, Placcel 230, Placcel 240, Placcel 303, Placcel 305, Placcel 308, Placcel 312, and Placcel 320 (trade names, all of them manufactured by Daisel chemical industries, Ltd.).

Examples of the polycarbonate polyol may include a compound obtained by dealcoholization condensation of glycols and dialkyl carbonate (for example, dimethyl carbonate, diethyl carbonate, or the like); a compound obtained by dephenolization condensation of glycols and diphenyl carbonates; and a compound obtained by deglycolization condensation of glycols and carbonates (for example, ethylene carbonate, diethyl carbonate, or the like).

Examples of the glycols may include an aliphatic diol such as 1,6-hexane diol, diethylene glycol, propylene glycol, 1,4-butane diol, 3-methyl-1,5-pentane diol, or neopentyl glycol; and an alicyclic diol such as 1,4-cyclohexane diol, or 1,4-cyclohexane dimethanol.

Further examples may include poly(hexamethylene carbonate) polyol obtained by condensation of 1,6-hexane diol and diethyl carbonate; poly(pentylene carbonate) obtained by condensation of pentane diol and diethyl carbonate; and poly(butylene carbonate) obtained by condensation of 1,4-butane diol and diethyl carbonate.

Examples of commercially available polycarbonate polyol include Placcel CD CD205, Placcel CD CD210, and Placcel CD CD220 (trade names, all of them manufactured by Daisel chemical industries, Ltd.), and PCDL T5651, PCDL T5652, PCDL T5650J (trade names, all of them manufactured by Asahi Kasei Corporation).

Examples of the polyester polyol may include the ones that are obtained by polycondensation of dicarboxylic acids or their anhydrides and polyols. Examples of the dicarboxylic acids may include succinic acid, adipic acid, sebacic acid, azelaic acid, dimer acid, maleic acid anhydride, isophthalic acid, terephthalic acid, and trimellitic acid.

Examples of the polyol may include, for example, ethylene glycol, propylene glycol, 1,4-butane diol, 1,5-pentane diol, 3-methyl-1,5-pentane diol, 1,6-hexane diol, neopentyl glycol, diethylene glycol, 1,4-cyclohexane diol, 1,4-cyclohexane dimethanol, decamethylene glycol, polyethylene glycol, and polytetramethylene glycol.

Examples of the polyester polyol may include polyethylene adipate, polybutylene adipate, and polyhexamethylene adipate. Examples of commercially available polyester polyol include ADEKA NEWACE F series, ADEKA NEWACE Y series, ADEKA NEWACE NS series or the like (trade names, manufactured by ADEKA Corp.); KURARAY POLYOL N-2010, P-4011, P-1020 or the like (trade names, all manufactured by KURARAY Co., Ltd.) ; and C-1000, C-1066, U-21, U-24, U-53, U-253, U-502, U-118A or the like (trade names, all manufactured by Mitsui Chemicals Polyurethanes, Inc.).

Regarding the molecular weight of the polyol (A2) that has -(C=O)O- group and/or -O(C=O)O- group, the number average molecular weight thereof is preferably 100 or more and 50,000 or less, more preferably 150 or more and 10,000 or less, and still more preferably 150 or more 5,000 or less. When the molecular weight is excessively small, the hardness of the matrix becomes too high because the crosslinking density increases, thereby possibly lowering the recording speed. When the molecular weight is excessively large, the hardness of the matrix becomes too low because the compatibility with other components lowers or the crosslinking density decreases, whereby the recorded content disappears in some cases.

In the present exemplary embodiments, because the polyol (A2) that has -(C=O)O- group and/or -O(C=O)O- group and a molecular structure intrinsically having a low moisture absorption is used as the component of the resin matrix (A), an advantage of increasing the freedom of compositional design for the composition for forming the volume hologram recording layer is attained.

When other polyols are used in place of the above-described polyol component (A2) in the preparation of the resin matrix (A), in order to limit the water absorption rate of the recording layer at 1.5 wt% or less, the concentration of the hydrophilic functional groups contained in the recording layer or the like is more largely limited, so that inevitably the selection of the source materials for the composition for forming the volume hologram recording layer or the like is likely to be limited.

<I-1-3. Additional components>

The resin matrix (A) in the present exemplary embodiments may contain additional components besides the above-described polyisocyanate (A1) and the polyol (A2) within the scope of the present invention.

Examples of the additional components may include compounds having a hydroxyl group, such as ethylene glycol, propylene glycol, 1,4-butane diol, 1,5-pentane diol, 3-methyl-1,5-pentane diol, 1,6-hexane diol, neopentyl glycol, diethylene glycol, 1,4-cyclohexane diol, 1,4-cyclohexane dimethanol, decamethylene glycol, polyethylene glycol, and polytetramethylene glycol, in order to change a property of the resin matrix (A).

Further, as additional components, for example, catalysts or additives may be admixed. Examples of the catalysts may include conventional urethane reaction catalysts such as a tin-based catalyst including dibutyltin dilaurate, dioctyltin dilaurate, and dibutyltin dioctoate or a tertiary amine catalyst including triethylamine and triethylene diamine. The amount of the catalyst to be used relative to the resin matrix (A) is in the range of usually 0. 0001 wt% or more, preferably 0.001 wt% or more, and usually 10 wt% or less, preferably 5 wt% or less. When the amount of the catalyst is excessively small, curing takes a long time in some cases. On the other hand, when the amount of the catalyst is excessively large, control of the curing reaction becomes difficult in some cases.

[I-2. Resin Matrix (B)]

The resin matrix (B) used for the composition for forming the volume hologram recording layer of the present exemplary embodiments contains at least an epoxy compound (B1) that has two or more epoxy groups in one molecule and a curing agent (B2).

<I-2-1. Epoxy compound (B1)>

The epoxy compound (B1) used for the resin matrix (B) is not particularly limited on the kind thereof as long as the epoxy compound (B1) has two or more epoxy groups in one molecule. When the number of the epoxy groups is small, hardness required for the matrix may not be obtained in some cases.
On the other hand, the upper limit of the number of the epoxy groups is not particularly limited, but the number is usually 8 or less and particularly preferably 4 or less. When the number of the epoxy groups is excessively large, formation of the matrix may take a long time in some cases because an enormous length of time is required to consume the epoxy groups.

Examples of the epoxy compound (B1) having two or more epoxy groups in one molecule may include a polyglycidyl ether compound of a polyol such as (poly)ethylene glycol, (poly)propylene glycol, (poly)tetramethylene glycol, trimethylol propane, or glycerin; an alicyclic epoxy compound having a 4 to 7 membered cyclic aliphatic group such as 3,4-epoxycyclohexylmethyl-3,4-epoxycyclohexane carboxylate or 3,4-epoxy-1-methylcyclohexyl-3,4-epoxy-1-methylhexane carboxylate; a bisphenol A-type epoxy compound; a hydrogenated bisphenol A-type epoxy compound; a bisphenol F-type epoxy compound; and a phenol or cresol novolac-type epoxy compound.

When the epoxy compound (B1) having two or more epoxy groups in one molecule has an alkylene oxide, the alkylene oxide has carbon atoms in the range from usually 4 to usually 10, preferably 4 to 8, and more preferably 4 to 6. When the carbon atom number is excessively large, compatibility with photosensitive compounds, polymerization initiators, catalysts or the like may lower in some cases because the polarity of the molecule becomes low, although the hydrophobicity increases. In addition, the glass transition temperature may increase and crystallization is likely to occur, causing the low recording speed or optical non-uniformity, resulting in data errors upon recording holograms in some cases.

Examples of the alkylene oxide having 4 to 10 carbon atoms may include an alkyltrimethylene oxide obtained by ring-opening of oxetane that has a carbon-atom containing substitution group and tetramethylene oxide obtained by ring-opening of tetrahydrofuran. Among these, tetramethylene oxide is particularly preferable considering the balance between hydrophobicity and compatibility and the glass transition temperature.
Further, an alkylene oxide obtained by copolymerizing tetramethylene oxide and neopentyl glycol is also usable from the viewpoint of lowering crystallinity.

The amount of the alkylene oxide is, with respect to the whole of the epoxy compound (B1), usually 10 wt% or more and preferably 50 wt% or more. When the amount of the alkylene oxide is small, the Tg of the matrix becomes too high, thereby lowering the recording speed in some cases. On the other hand, the upper limit thereof is not particularly limited and is less than 100%.
The epoxy compound (B1) that satisfies the above conditions may be synthesized by known methods, generally by using epichlorohydrin and a glycol having an alkylene oxide chain with 4 or more carbon atoms.

The number average molecular weight of the epoxy compound (B1) is preferably 200 or more and 50,000 or less, more preferably 300 or more and 20,000 or less, and still more preferably 300 or more and 10, 000 or less. When the molecular weight is excessively small, the hardness of the matrix becomes too high, thereby lowering the recording speed in some cases. On the other hand, when the molecular weight is excessively large, the hardness of the matrix is too small, whereby the recorded content disappears in some cases.

<I-2-2. Curing agent (B2)>

The curing agent (B2) used for the resin matrix (B) is not particularly limited on the kind thereof, as long as the agent is a compound having a functional group reacting with an epoxy group, and may be selected appropriately from known compounds.
Examples of the curing agent (B2) may include poly-functional phenols, amines, acid anhydrides, thiols, anion polymerization initiators, and cation polymerization initiators.
Examples of the poly-functional phenols may include bisphenol, novolac-type phenol resin, and resol-type phenol resin.
Examples of the amines may include the ones having a primary amine group or a secondary amine group. Examples of the amines may include an aliphatic polyamine such as ethylenediamine, diethylenetriamine, or the derivatives thereof; an alicyclic polyamine such as isophorone diamine, menthane diamine, N-aminoethyl piperazine, or the derivatives thereof; aromatic polyamine; polyamide; and imidazole compounds.
Examples of the alicyclic polyamines may include isophorone diamine, menthane diamine, N-aminoethyl piperazine, and the derivatives thereof. Examples of the aromatic polyamines may include m-xylylene diamine, diaminodiphenyl methane, and the derivatives thereof. Examples of the polyamides may include a condensation product of a dicarboxylic acid such as dimer acid and the foregoing polyamine. Examples of the imidazole compounds may include imidazole, 2-methylimidazole, and the derivatives thereof. Examples of other polyamines may include dicyandiamide and adipic acid dihydrazide.
Examples of the acid anhydrides may include a mono-functional acid anhydride such as phthalic anhydride, tetrahydrophthalic anhydride, or the derivatives thereof; and a bi-functional acid anhydride such as pyromellitic anhydride, benzophenone tetracarboxylic anhydride, or the derivatives thereof.
Illustrative examples of the thiols may include a thiol compound such as a dithiol including 1,3-butane dithiol, 1,4-butane dithiol, 2,3-butane dithiol, 1,2-benzene dithiol, 1,3-benzene dithiol, 1,4-benzene dithiol, 1,10-decane dithiol, 1,2-ethane dithiol, 1,6-hexane dithiol, 1,9-nonane dithiol, EPOMATE QX10 (manufactured by Japan Epoxy Resins Co., Ltd.), and EPOMATE QX11 (manufactured by Japan Epoxy Resins Co., Ltd.); and a polythiol including THIOKOL (manufactured by Toray Fine Chemicals Co., Ltd.), CUPCURE 3-800 (manufactured by Japan Epoxy Resins Co., Ltd.), and EPICURE QX40 (manufactured by Japan Epoxy Resins Co., Ltd.). Among these, commercially available rapid curing polythiols such as EPOMATE QX10, EPOMATE QX11, CUPCURE 3-800, or EPICURE QX40 are suitably used.
The anion polymerization initiator generates anions by an action of heat or active energy ray irradiation, and as an example, there may be mentioned amines or the like. Examples of the amines may include an amino group containing compound such as dimethylbenzyl amine, dimethylaminomethyl phenol, or 1,8-diazabicyclo[5.4.0]undecene-7, and the derivatives thereof; and an imidazole compound such as imidazole, 2-methyl imidazole, or 2-ethyl-4-methyl imidazole, and the derivatives thereof.
The cation polymerization initiator generates cations by an action of heat or active energy ray irradiation, and as an example, there may be mentioned an aromatic onium salt or the like. Illustrative examples may include a compound composed of an anion component such as $SbF_6^-$, $BF_4^-$, $AsF_6^-$, $PF_6^-$, $CF_3SO_3^-$ or $B(C_6F_5)_4^-$ and an aromatic cation component containing an atom such as iodine, sulfur, nitrogen, or phosphorus. Among these, a diaryl iodonium salt, a triaryl sulfonium salt or the like is preferable. In addition, SANAID SI series manufactured by Sanshin Chemical Industry Co., Ltd. also may be suitably used as the cation polymerization initiator.
In particular, the curing agent (B2) is preferably at least any one kind selected from the group consisting of amines, acid anhydrides, thiols, anion polymerization initiators, and cation polymerization initiators. These exhibit an excellent productivity of the matrix because they have a high curing speed.
The amount of the curing agent (B2) to be used differs depending on whether the curing agent (B2) is the anion or cation polymerization initiator or a compound other than the anion or cation polymerization initiator.
In the case where the curing agent (B2) is a compound (amines, acid anhydrides, thiols, or the like) other than the anion or cation polymerization initiator, the amount thereof to be used is suitably, in a ratio to the number of moles of epoxy groups, in the range of usually 0.1 equivalent or more and particularly 0.7 equivalent or more, and usually 2.0 equivalents or less and particularly 1.5 equivalents or less. In either case where the used amount of the curing agent is too small or too large, the number of unreacted functional groups is large, thereby impairing the storage stability in some cases.
On the other hand, in the case where the curing agent (B2) is the anion or cation polymerization initiator, the amount thereof to be used is suitably, in a ratio to the resin matrix (B), in the range of usually 0.001 wt% or more and particularly 0.01 wt% or more, and usually 50 wt% or less and particularly 10 wt% or less. When the used amount of the curing agent is excessively small, the polymerization reaction takes too long a time in some cases because the concentration of the initiator is too low. On the other hand, when the used amount of the curing agent is excessively large, a continuous open-ring reaction as a polymerization reaction does not proceed in some cases.
Note that the various curing agents exemplified above may be used solely or in any combination and ratio of two or more kinds. When two or more curing agents are used in combination, the total amount thereof is selected in a manner that it falls in the above range.

Further, the imidazole compound may be allowed to serve as the anion polymerization initiator and also may be allowed to function as amines. Namely, when the imidazole compound is used in an amount specified in a range preferable for the anion polymerization initiator, it works as the anion polymerization initiator. When the imidazole compound is used in an amount specified in a range preferable for the amines, it works as the amines. Therefore, considering this, the amount thereof to be used may be selected in accordance with the objective functions.

<I-2-3. Additional components>

The resin matrix (B) in the present exemplary embodiments may contain additional components besides the above-described epoxy compound (B1) and curing agent (B2) within the scope of the present invention.
For example, various additives may be optionally admixed with the resin matrix (B). Examples of the additives may include a curing promoter.

Examples of the curing promoter may include tertiary amines such as benzyldimethylamine; imidazoles such as 2-ethyl-4-methylimidazole; tertiary phosphines such as triphenylphosphine; quaternary phosphonium salts such as tetrabutylphosphonium bromide; and quaternary ammonium salts such as tetramethylammonium bromide. These curing promoters may be used solely or in any combination and ratio of two or more kinds.

The amount of the curing promoter to be used is, in a ratio to the resin matrix (B), in the range of usually 0.0001 wt% or more and particularly 0.001 wt% or more, and usually 10 wt% or less and particularly 5 wt% or less. When the used amount of the curing promoter is excessively small, curing takes too long a time in some cases. On the other hand, when the used amount of the curing promoter is excessively large, the control of the curing reaction becomes difficult in some cases. Note that when two or more curing promoters are used in combination, the total amount thereof is selected in a manner that it falls in the above range.

[I-3. Additional Resin Matrixes]

In the exemplary embodiment of the present invention, for the resin matrix (A), polyols other than the polyol (A2) that has -(C=O)O- group and/or -O(C=O)O- group may be used.

Examples of the polyols other than the polyol (A2) may include polyols such as polyethylene glycol, polypropylene glycol, poly-1,4-butane diol, poly-1,5-pentane diol, poly-3-methyl-1,5-pentane diol, poly-1,6-hexane diol, polyneopentyl glycol, diethylene glycol, poly-1,4-cyclohexane diol, poly-1,4-cyclohexane dimethanol, polydecamethylene glycol, and polytetramethylene glycol.

In the exemplary embodiment, for the resin matrix (B), other epoxy compounds than the epoxy compound (B1), which has an alkylene oxide with 4 to 10 carbon atoms and two or more epoxy groups in one molecule may be used. On this occasion, much more attention is required to be paid so as not to increase the moisture absorption rate of the recording layer. For this purpose, an effective measure may include reducing as much as possible the concentration of the hydrophilic functional groups contained in the recording layer such as hydroxyl group, isocyanate group, urethane bonding, or urea bonding or introducing a hydrophobic additive into the recording layer forming composition.

Examples of the method of reducing the concentration of hydrophilic functional groups in the resin matrix may include using polyisocyanate or polyol with a relatively high molecular weight; using polyisocyanate or polyol containing smaller number of reactive functional groups; and reducing as much as possible the unreacted hydroxyl group or isocyanate group.
In this case, it is desirable that the concentration of hydrophilic functional groups in the recording layer is in the range of from 0.5 milli-equivalent to 50 milli-equivalents per 1 g of the recording layer, preferably from 1 milli-equivalent to 25 milli-equivalents, and more preferably from 1 milli-equivalent to 20 milli-equivalents.

[I-4. Photosensitive Compound (C)]

The photosensitive compound (C) used in the composition for forming the volume hologram recording layer of the present exemplary embodiments is not particularly limited on the kind thereof, but may be selected from known compounds as needed. Usually, polymerizable monomers are used.
Examples of the polymerizable monomers may include cation polymerizable monomers, anion polymerizable monomers, and radical polymerizable monomers.

<I-4-1. Cation polymerizable monomers>

Examples of the cation polymerizable monomers may include (1) a compound having an oxirane ring, (2) styrene and the derivatives thereof, (3) vinylnaphthalene and the derivatives thereof, (4) vinyl ethers, (5) N-vinyl compounds, and (6) compounds having an oxetane ring.

Among these, a compound at least having an oxetane ring is preferably used. Further, it is preferable that the compound having an oxetane ring is used in combination with the compound having an oxirane ring.

Examples of the compound having an oxirane ring (1) may include a prepolymer that contains two or more oxirane rings in one molecule. Examples of the prepolymer may include alicyclic polyepoxides, polyglycidyl esters of polybasic acids, polyglycidyl ethers of polyhydric alcohols, polyglycidyl ethers of polyoxyalkylene glycols, polyglycidyl ethers of aromatic polyols, hydrogenated polyglycidyl ethers of aromatic polyols, urethane polyepoxy compounds, and epoxidized polybutadienes. These prepolymers may be used solely or in any combination and ratio of two or more kinds.

Examples of the styrene and the derivatives thereof (2) may include styrene, p-methylstyrene, p-methoxystyrene, β-methylstyrene, p-methyl-β-methylstyrene, α-methylstyrene, p-methoxy-β-methylstyrene, and divinylbenzene.

Examples of the vinylnaphthalene and the derivatives thereof (3) may include 1-vinylnaphthalene, α-methyl-1-vinylnaphthalene, β-methyl-1-vinylnaphthalene, 4-methyl-1-vinylnaphthalene, and 4-methoxy-1-vinylnaphthalene.

Examples of the vinyl ethers (4) may include isobutyl ether, ethylvinyl ether, phenylvinyl ether, p-methylphenylvinyl ether, p-methoxyphenylvinyl ether, α-methylphenylvinyl ether, β-methylisobutylvinyl ether, and β-chloroisobutylvinyl ether.

Examples of the N-vinyl compound (5) may include N-vinylcarbazole, N-vinylpyrrolidone, N-vinylindole, N-vinylpyrrole, N-vinylphenothiazine, N-vinylacetoanilide, N-vinylethylacetamide, N-vinylsuccinimide, N-vinylphthalimide, N-vinylcaprolactam, and N-vinylimidazole.

Examples of the compound having an oxetane ring (6) may include various known oxetane compounds as described in Japanese Patent Application Laid Open Publications No. 2001-220526 and No. 2001-310937 and others. The above exemplified cation polymerizable monomers may be used solely or in any combination and ratio of two or more kinds.

<I-4-2. Anion polymerizable monomers>

Examples of the anion polymerizable monomers may include hydrocarbon monomers and polar monomers. Examples of the hydrocarbon monomers may include styrene, α-methyl styrene, butadiene, isoprene, vinylpyridine, vinylanthracene, and the derivatives thereof.

Examples of the polar monomers may include methacrylic acid esters such as methylmethacrylate, ethylmethacrylate, or isopropylmethacrylate; acrylic acid esters such as methylacrylate or ethylacrylate; vinyl ketones such as methylvinyl ketone, isopropylvinyl ketone, cyclohexylvinyl ketone, or phenylvinyl ketone; isopropenyl ketones such as methylisopropenyl ketone or phenylisopropenyl ketone; and other polar monomers such as acrylonitrile, acrylamide, nitroethylene, methylenemaloate, cyanoacrylate, or vinylidene cyanide.

The above exemplified anion polymerizable monomers may be used solely or in any combination and ratio of two or more kinds.

<I-4-3. Radical polymerizable monomers>

The radical polymerizable monomers are a compound having one or more ethylenic unsaturated double bond in one molecule, and may include, for example, (meth)acrylates, (meth)acrylamides, vinyl esters, and styrenes.

Examples of the (meth)acrylates may include methyl (meth)acrylate, ethyl (meth)acrylate, (n- or i-)propyl (meth)acrylate, (n-, i-, sec-, or t-)butyl (meth)acrylate, amyl (meth)acrylate, adamantyl (meth)acrylate, chloroethyl (meth)acrylate, 2-hydroxyethyl (meth)acrylate, 2-hydroxypropyl (meth)acrylate, 2-hydroxypentyl (meth)acrylate, cyclohexyl (meth)acrylate, allyl (meth)acrylate, trimethylolpropane mono(meth)acrylate, pentaerythritol mono(meth)acrylate, benzyl (meth)acrylate, methoxybenzyl (meth)acrylate, chlorobenzyl (meth)acrylate, hydroxybenzyl (meth)acrylate, hydroxyphenetyl (meth)acrylate, dihydroxyphenetyl (meth)acrylate, furfuryl (meth)acrylate, tetrahydrofurfuryl (meth)acrylate, phenyl (meth)acrylate, hydroxyphenyl (meth)acrylate, chlorophenyl (meth)acrylate, sulfamoylphenyl (meth)acrylate, 2-phenoxyethyl (meth)acrylate, 2-(hydroxyphenylcarbonyloxy)ethyl (meth)acrylate, phenol EO modified acrylate, paracumylphenol EO modified acrylate, nonylphenol EO modified acrylate, N-acryloyloxyethyl hexahydrophthalimide, bisphenol F EO modified diacrylate, bisphenol A EO modified diacrylate, tribromophenyl acrylate, dicylopentenyloxyethyl acrylate, dicyclopentanyl acrylate, tricyclodecanedimethylol diacrylate, and bisphenoxyethanolfluorene diacrylate.

Examples of the (meth)acrylamides may include (meth)acrylamide, N-methyl (meth)acrylamide, N-ethyl (meth)acrylamide, N-propyl (meth)acrylamide, N-butyl (meth)acrylamide, N-benzyl (meth)acrylamide, N-hydoxyethyl (meth)acrylamide, N-phenyl (meth)acrylamide, N-tolyl (meth)acrylamide, N-(hydroxyphenyl) (meth)acrylamide, N-(sulfamoylphenyl) (meth)acrylamide, N-(phenylsulfonyl) (meth)acrylamide, N-(tolylsulfonyl) (meth)acrylamide, N,N-dimethyl (meth)acrylamide, N-methyl-N-phenyl (meth)acrylamide, and N-hydroxyethyl-N-methyl (meth)acrylamide.

Examples of the vinyl esters may include vinyl acetate, vinyl butylate, vinyl benzoate, vinyl benzoate, vinyl t-butylbenzoate, vinyl chlorobenzoate, vinyl 4-ethoxybenzoate, vinyl 4-ethylbenzoate, vinyl 4-methylbenzoate, vinyl 3-methylbenzoate, vinyl 2-methylbenzoate, vinyl 4-phenylbenzoate, and vinyl pivalate.

Examples of the styrenes may include styrene, p-acetylstyrene, p-benzoyl styrene, 2-butoxymethylstyrene, 4-butylstyrene, 4-sec-butylstyrene, 4-tert-butylstyrene, 2-chlorostyrene, 3-chlorostyrene, 4-chlorostyrene, dichlorostyrene, 2,4-diisopropylstyrene, dimethylstyrene, p-ethoxystyrene, 2-ethylstyrene, 2-methoxystyrene, 4-methoxystyrene, 2-methylstyrene, 3-methylstyrene, 4-methylstyrene, p-methylstyrene, p-phenoxystyrene, p-phenylstyrene.

The above exemplified radical polymerizable monomers may be used solely or in any combination and ratio of two or more kinds.

<I-4-4. Others>

Any of the above exemplified cation polymerizable monomers, anion polymerizable monomers, and radical polymerizable monomers may be used, and two or more kinds may be used in combination. However, for the reason that the reaction of the resins composing the matrix is not likely to be inhibited, it is preferable that the radical polymerizable monomers are used as the photosensitive compound (C).

[I-5. Mixing Ratios of Constituents]

The NCO/OH ratio of the polyisocyanate (A1) and polyol (A2) composing the resin matrix (A) is not particularly limited. Preferably, the reaction is performed at an equivalent ratio. Here, NCO represents the isocyanate group concentration and OH represents the hydroxyl group concentration.

The ratio of the photosensitive compound (C) with respect to 100 parts by weight of a resin matrix (A) and/or a resin matrix (B) is preferably 0.5 part by weight or more and 100 parts by weight or less, and particularly 1 part by weight or more and 50 parts by weight or less. When the used amount of the photosensitive compound is excessively small, the change in refractive index is small, thereby lowering the recording efficiency in some cases. On the other hand, when the used amount of the photosensitive compound is excessively large, unreacted photosensitive compound remains in a large amount, thereby causing bleed out when incorporated into a recording material in some cases.

[I-6. Additional Components]

The composition for forming the volume hologram recording layer used in the present exemplary embodiments may contain additional components besides the above-described resin matrix (A), resin matrix (B), and photosensitive compound (C) within the scope of the present invention.

For example, the composition for forming the volume hologram recording material in the present exemplary embodiments may be admixed with any additives in accordance with necessities including the control of excitation wavelength or energy of the sensitizer, the control of reaction, and the improvement of performances. Examples of the additives may include the following compounds.

Examples of a compound that controls the excitation of the sensitizer may include an auxiliary sensitizer.

Examples of a compound used for the control of reaction may include a polymerization initiator, a chain transfer agent, a polymerization terminator, a compatibilizer, and a reaction aiding agent.

In addition to that, examples of an additive required for the improvement of performances may include a dispersant, a defoaming agent, a plasticizer, a preservative, a stabilizer, and an oxidation inhibitor.

These additives may be used solely or in any combination and ratio of two or more kinds.

It is preferable that the amount of the additives to be used is, in a ratio to the composition for forming the volume hologram recording layer of the present invention, usually in the range of 0.001 wt% or more, particularly 0.01 wt% or more, and usually 30 wt% or less, particularly 10 wt% or less. When two or more additives are used in combination, the total amount thereof is selected in a manner that it falls in the above range.

In particular, examples of suitable additives when the photosensitive compound (C) is the radical polymerizable monomers may include a polymerization initiator and a sensitizer. Hereinafter, these will be described in detail.

<I-6-1. Polymerization initiator>

As the polymerization initiator, any of known photo-induced radical polymerization initiators may be used. Examples thereof may include azo compounds, azide compounds, organic peroxides, organic borates, onium salts, bisimidazole derivatives, titanocene compounds, iodonium salts, organic thiol compounds, and halogenated hydrocarbon derivatives. These may be used solely or in any combination and ratio of two or more kinds. Among these, as the polymerization initiator, titanocene compounds, acylphosphine oxide compounds or the like are preferable, because the polymerization reaction proceeds in a visible light region.

When the titanocene compounds are used as the polymerization initiator, the kind thereof is not particularly limited, but the various titanocene compounds described in Japanese Patent Application Laid Open Publications No. 59-152396 and No. 61-151197 may be selected and used appropriately, for example.

Illustrative examples of the titanocene compounds may include di-cyclopentadienyl-Ti-di-chloride, di-cyclopentadienyl-Ti-bis-phenyl, di-cyclopentadienyl-Ti-bis-2,3,4,5,6-pentafluorophen-1-yl, di-cyclopentadienyl-Ti-bis-2,3,5,6-tetrafluorophen-1-yl, di-cyclopentadienyl-Ti-bis-2,4,6-trifluorophen-1-yl, di-cyclopentadienyl-Ti-bis-2,6-di-fluorophen-1-yl, di-cylopentadienyl-Ti-bis-2,4-di-fluorophen-1-yl, di-methylcyclopentadienyl-Ti-bis-2,3,4,5,6-pentafluorophe n-1-yl, di-methylcyclopentadienyl-Ti-bis-2,3,5,6-tetrafluorophen-1-yl, di-methylcyclopentadienyl-Ti-bis-2,6-difluorophen-1-yl, and di-cyclopentadienyl-Ti-bis-2,6-difluoro-3-(pyri-1-yl)-phe n-1-yl.

Particularly, di-cyclopentadienyl-Ti-bis-2,6-difluoro-3-(pyri-1-yl)-phe n-1-yl is suitably used as the polymerization initiator, because it has absorption up to around 550 nm, allows argon ion laser (488 nm) or FD-Nd/YAG laser (532 nm) to be used as a light source, and thus it has a high versatility.

Illustrative examples of the acylphosphine oxide compounds may include a mono-functional initiator that has only one cleavage point by light irradiation in one molecule and a bi-functional initiator that has two cleavage points by light irradiation in one molecule.

Examples of the mono-functional initiator may include triphenylphosphine oxide, 2,4,6-trimethylbenzoyl-diphenylphosphine oxide and 2,6-dichlorobenzoyl-diphenylphosphine oxide.

Examples of the bi-functional initiator may include bis(2,4,6-trimethylbenzoyl)-phenylphosphine oxide, bis(2,6-dimethoxybenzoyl)-2,4,4-trimethylpentylphosphine oxide, bis(2,6-dichlorobenzoyl)-4-propylphenylphosphine oxide, and bis (2,6-dichlorobenzoyl)-2,5-dimethylphenylphosphine oxide. The above-described various polymerization initiators may be used solely or in any combination and ratio of two or more kinds.

It is preferable that the amount of the polymerization initiator to be used is, in a ratio to the total solid content of the composition used to form the volume hologram recording material, in the range of usually 0.1 wt% or more, particularly 0.5 wt% or more, and usually 10 wt% or less, particularly 5 wt% or less. When the used amount of the polymerization initiator is excessively small, the photo-polymerization speed becomes slow due to the lowering in the amount of radicals generated, thereby lowering the hologram recording sensitivity in some cases. On the other hand, when the used amount of the polymerization initiator is excessively large, the hologram recording sensitivity also lowers in some cases, because the radicals generated by light irradiation less contribute to the photo-polymerization due to the recombination or disproportionation thereof. When two or more polymerization initiators are used, the total amount thereof is selected in a manner that it falls in the above range.

<I-6-2. Sensitizer>

The sensitizer may be selected optionally from various known sensitizers. In accordance with the wavelength of the laser light used for recording, the kind of the initiator used for the sensitizer may be selected as needed.

When a green laser light is used, illustrative examples of a suitable sensitizer may include the compounds that are described in Japanese Patent Application Laid Open Publications No. 5-241338 and No. 2-69, Japanese Examined Patent Application Publications No. 2-55446 and No. 2-30321, Japanese Patent Application Laid Open Publications No. 6-116313 and No. 47-2528, and others.

When a blue laser light is used, illustrative examples of a suitable sensitizer may include the compounds that are described in Japanese Patent Application Laid Open Publication No. 2000-10277, No. 2002-362326, No. 2004-198446, No. 2004-252421, No. 2004-212958, No. 2002-169282, No. 2004-191938, No. 2002-268239 and No. 2005-162415, and others. The above-exemplified various kinds of sensitizers may be used solely or in any combination and ratio of two or more kinds.

As the sensitizer, generally, the color compounds such as the above-described dyes are used in many cases so as to absorb visible and ultraviolet laser light. However, when an ultimate hologram optical recording medium is requested to be colorless and transparent, it is preferable that a cyanine dye is used as the sensitizer.

Cyanine dyes are generally easy to be decomposed by light irradiation, so that post exposure is applied. Namely, by leaving the hologram optical recording medium for several hours to several days under the illumination of indoor light or sunlight, the cyanine dye contained in the volume hologram recording material is decomposed and loses absorption in the visible light region, so that a colorless transparent hologram optical recording medium is attained.

The amount of the sensitizer is required to be increased or decreased in accordance with the thickness of the layer that contains the volume hologram recording material of the present invention, but the amount is desirably, in a ratio to the polymerization initiator, in the range of usually 0.01 wt% or more, particularly 0.1 wt% or more, and usually 10 wt% or less, particularly 5 wt% or less. When the used amount of the sensitizer is excessively small, the efficiency of the initiator lowers, thereby taking a tremendously long time for recording in some cases. On the other hand, when the used amount of the sensitizer is excessively large, absorption of the light used for recording and reproduction becomes large, thereby making it difficult for the light to come down in a depth direction in some cases. When two or more sensitizers are used in combination, the total amount thereof is selected in a manner that it falls in the above range.

<I-6-3. Additional additives>

As an additional additive other than the above, a plasticizer or the like that is added in order to improve the reaction efficiency or to control the recording layer properties, or an additive or the like that is used for the control of the water absorption rate of the recording layer or the like may be admixed.
Examples of the plasticizer may include phthalic acid esters such as dioctyl phthalate, diisononyl phthalate, diisodecyl phthalate, or diundecyl phthalate; adipic acid esters such as bis(2-ethylhexyl) adipate, diisononyl adipate, or di-n-butyl adipate; sebacic acid esters such as dioctyl sebacate or dibutyl sebacate; phosphoric acid esters such as tricresyl phosphate; citric acid esters such as tributyl acetylcitrate; trimellitic acid esters such as trioctyl trimellitate; epoxidized soy bean oil; chlorinated paraffin; alkoxylated (poly)alkylene glycol esters such as acetoxymethoxy propane; and end-alkoxylated polyalkylene glycol such as dimethoxypolyethylene glycol.
As the additive that lowers the water absorption rate, a compound having a hydrophobic structure is preferable. Examples of the compound may include a fluorine-containing compound including a perfluoro compound such as 1H-perfluoro decane, perfluoro dodecane, perfluoro heptane, 1H-perfluoro heptane, perfluoro hexane, 1H-perfluoro hexane, perfluoro octane, perfluoro-2,11-dimethyldodecane, perfluoro-2,7-dimethyloctane, perfluoro-3,7-dimethyloctanoic acid, perfluoro decalin, or perfluoro-1,10-decane dicarboxylic acid; and a silicone compound such as polyether modified silicone, methylstyryl modified silicone, alkyl modified silicone, fatty acid ester modified silicone, alkoxy modified silicone, fluorine modified silicone, or aminophenyl modified silicone.
The amount of these additives to be used is, in a ratio to the total solid content of the composition for forming the volume hologram recording layer, in the range of usually 0.01 wt% or more and 50 wt% or less, preferably 0.05 wt% or more and 20 wt% or less. When the amount of the additives is excessively small, possibly the water absorption rate is not sufficiently lowered. When the amount of the additives is excessively large, the transparency of the recording layer is likely to lower or the bleed out of the additives is likely to be marked.

[I-7. Others]

The composition for forming the volume hologram recording layer of the present exemplary embodiments is used in the application of a volume hologram recording material. Due to this, the properties (for example, low moisture absorption, excellent storage stability, excellent compatibility, and the like) that the composition for forming the volume hologram recording layer of the present exemplary embodiments possesses may be efficiently utilized. The volume hologram recording material using the composition for forming the volume hologram recording layer of the present exemplary embodiments is hereinafter referred to as a "volume hologram recording material of the present exemplary embodiments."
The volume hologram recording material of the present exemplary embodiments may be composed of only the composition for forming the volume hologram recording layer of the present exemplary embodiments or may contain additional components. The additional components are not particularly limited, but the examples thereof may include various additives such as a light dispersing agent or a color material. The amount of the additional components is also arbitrary within the scope of the present invention.

[II. Volume Hologram Optical Recording Medium]

The volume hologram optical recording medium of the present exemplary embodiments is composed at least of a transparent substrate and a recording layer containing a synthetic resin. Other configurations of the volume hologram optical recording medium of the present exemplary embodiments are not specifically limited and are arbitrarily selected. Hereinafter, a volume hologram optical recording medium according to one exemplary embodiment of the present invention (this is also referred to as an "optical recording medium according to the present exemplary embodiment" in some cases) will be described in detail.
The optical recording medium of the present exemplary embodiment is composed at least of a transparent substrate and a recording layer that is formed by using the above-described volume hologram recording material of the present exemplary embodiments. Further, the optical recording medium according to the present exemplary embodiment includes optionally additional layers.

[II-1. Recording Layer]

The recording layer is the layer in which information is recorded. Information is usually recorded as a hologram. The thickness of the recording layer is not particularly limited and is selected appropriately considering recording method or the like, but is generally in the range of usually 1 $\mu$m or more, preferably 10 $\mu$m or more, and usually 1 cm or less, preferably 2,000 $\mu$m or less. When the recording layer is excessively thick, the selectivity of each hologram becomes low upon multiple recording in the optical recording medium, thereby lowering the degree of the multiple recording in some cases. When the recording layer is excessively thin, it is difficult to mold uniformly the whole recording layer, whereby multiple recording with a uniform diffraction efficiency of each hologram and a high S/N ratio possibly becomes difficult in some cases.

[II-2. Transparent Substrate]

Usually, the optical recording medium has a transparent substrate, and the recording layer and additional layers are laminated on the transparent substrate to form the optical recording medium.

The transparent substrate is not particularly limited on the details thereof as long as the substrate has required strength and durability, and an arbitrary transparent substrate is usable. Specifically, the shape of the transparent substrate is not limited, but the substrate is usually formed into a plate or a film.

Examples of the material for the transparent substrate may include an organic material such as acryl, polyethylene terephthalate, polyethylene naphthoate, polycarbonate, polyethylene, polypropylene, amorphous polyolefin, polystyrene, or cellulose acetate; and an inorganic material such as glass, silicon, or quartz. Among these, polycarbonate, acryl, polyester, amorphous polyolefin, glass, and the like are preferable, and particularly polycarbonate, acryl, amorphous polyolefin and glass are more preferable.

In addition, a transparent substrate coated with metal such as gold, silver, or aluminum, or a dielectric such as magnesium fluoride or zirconium oxide may be used.

The thickness of the transparent substrate is also not particularly limited, but usually in the range of preferably 0.1 mm or more and 1 mm or less. When the transparent substrate is too thin, it warps because the mechanical strength of the optical recording medium becomes insufficient in some cases. When too thick, possibly the amount of light transmission decreases and the cost becomes additionally high in some cases.

The surface of the transparent substrate may be subjected to surface treatment. Usually, the surface treatment is performed to increase the adhesion between the transparent substrate and the recording layer. Examples of the surface treatment may include corona discharge treatment to the transparent substrate and preliminary forming of an underlying coating layer on the transparent substrate. The composition used for the underlying layer may include halogenated phenol, a partially hydrolyzed copolymer of vinyl chloride and vinyl acetate, and a polyurethane resin.

The surface treatment may be performed for another purpose other than increasing adhesion. Examples of the surface treatment for another purpose may include a reflective coating treatment in which a reflective coating layer made of metal such as gold, silver or aluminum is formed; and a dielectric coating treatment in which a dielectric layer made of magnesium fluoride or zirconium oxide is formed. These layers may be formed in a single layer or in two or more layers.

Further, these surface treatments may be performed for the purpose of controlling the gas or water permeability of the substrate. In the present exemplary embodiments, the storage stability of the medium is increased by reducing the water absorption rate of the recording layer, but the reliability of the medium may be still more increased by allowing the transparent substrates holding the recording layer therebetween to have a function of suppressing the permeation of gas or water.

The transparent substrate may be provided on either side of upper or lower or on both sides of the recording layer of an optical recording medium according to the present exemplary embodiment.

In the case of an optical recording medium that has the transparent substrate on one side or both sides of the recording layer, recording of a transmission or reflection hologram is attainable. In the case of using a transparent substrate having a reflective property on one side, recording of a reflection hologram is attainable.

A patterning for data addressing may be formed on the transparent substrate. There is not any limitation on the method of patterning, but in one method, an uneven pattering may be formed on the transparent substrate itself; in another method, the patterning may be formed on a reflection layer (described later); or the patterning may be formed by a combination of the former two methods, for example.

[II-3. Additional Layers]

The optical recording medium according to the present exemplary embodiments may include additional layers besides the recording layer and transparent substrate described above. Examples of the additional layers may include a protection layer, a reflection layer and an anti-reflection layer (anti-reflection film).

The protection layer serves to prevent adverse effects such as lowering in sensitivity or degradation of storage stability caused by oxygen or water. There is not any limitation on the specific configuration of the protection layer, but known ones are applicable optionally. A layer composed of a water-soluble polymer, at least any one of organic and inorganic materials, or the like may be formed as the protection layer, for example.

The reflection layer is formed when the optical recording medium is configured in a reflection type. In the case of a reflection type optical recording medium, the reflection layer may be formed between the transparent substrate and the recording layer or on the outside face of the transparent substrate, but usually preferably between the transparent substrate and the recording layer.

In both of the transparent and reflection type optical recording media, the anti-reflection film may be provided on the incoming and outgoing sides of the object light and read-out light or between the recording layer and the transparent substrate. The anti-reflection film serves to enhance the utilization efficiency of light and to prevent visitation of ghost images.

[II-4. Method of Producing Optical Recording Medium]

There is not any particular limitation on the method of producing the optical recording medium according to the present exemplary embodiment, and the medium may be produced by any methods. For example, the recording layer is formed by coating the transparent substrate with the volume hologram recording material according to the present exemplary embodiments without solvent so as to produce the medium. On this occasion, any method may be applied as the coating method. Illustrative examples of the method may include spray coating, spin coating, wire bar coating, dip coating, air knife coating, roll coating, blade coating, and doctor roll coating.

When a thick recording layer is formed in particular, a method in which the volume hologram recording material according to the present exemplary embodiments is put in a mold to be shaped or a method in which a separation film is coated with the volume hologram recording material and then the film is punched out to obtain the recording layer may be also used.

Alternatively, the volume hologram recording material according to the present exemplary embodiments described above may be mixed with solvent to prepare a coating liquid, which is then applied to and dried on the transparent substrate to form the recording layer. On this occasion, any method may be used for the coating. An example of the method includes similar coating methods to the above-described coating methods.

There is not any particular limitation on the kind of the solvent. Usually, it is preferable to use a solvent that has sufficient capability of dissolving the components used, provides an adequate coatability, and is not corrosive to the transparent substrate.

Examples of the solvent may include a ketone solvent such as acetone, methyl ethyl ketone, methyl isobutyl ketone, cyclohexanone, or methyl amyl ketone; an aromatic solvent such as toluene or xylene; an alcohol solvent such as methanol, ethanol, propanol, or n-butanol; a ketone alcohol solvent such as diacetone alcohol or 3-hydroxy-3-methyl-2-butanone; an ether solvent such as tetrahydrofuran or dioxane; a halogenated solvent such as dichloromethane, dichloroethane, or chloroform; a cellosolve solvent such as methyl cellosolve, ethyl cellosolve, butyl cellosolve, methylcellosolve acetate, or ethyl cellosolve acetate; a propylene glycol solvent such as propyleneglycol monomethyl ether, propyleneglycol monoethyl ether, propyleneglylcol monobutyl ether, or propyleneglycol monomethyl ether acetate; an ester solvent such as ethyl acetate, butyl acetate, amyl acetate, or butyl acetate; a perfluoroalkyl alcohol solvent such as tetrafluoro propanol, octafluoro pentanol, or hexafluoro butanol; a highly polar solvent such as dimethylformamide, dimethylacetoamide, N-methylpyrrolidone, or dimethylsulfoxide; a linear hydrocarbon solvent such as n-hexane or n-octane; a cyclic hydrocarbon solvent such as cyclohexane or methylcyclohexane; and the mixtures thereof.

These solvents may be used solely or in any combination and ratio of two or more kinds.

There is not any particular limitation on the amount of the solvent to be used. However, considering coating efficiency, handling or the like, the amount of the solvent to be used is preferably adjusted in a manner that the solid content concentration of the coating liquid is about 1 wt% or more and about 1,000 wt% or less.

Further, when a volatile component is less in amount in the volume hologram recording material of the present exemplary embodiments, the volume hologram recording material of the present exemplary embodiments may be produced by molding such as injection molding or hot pressing, for example. In this case, when the resultant molding has sufficient thickness, toughness, strength and the like, the molding may be used as it is as the optical recording medium according to the present exemplary embodiment.

Alternatively, after the resin matrix (A) or the resin matrix (B) is molded into a desirable shape, the photosensitive compound (C), additional additives and the like may be impregnated therein so as to produce the recording layer composed of the volume hologram recording material of the present invention.

The optical recording medium according to the present exemplary embodiments produced in accordance with the procedure described above may be formed into a self-supporting slab or disc and is usable for applications such as three-dimensional image display devices, diffraction optical elements, or large capacity memories.

[II-5. Recording and Reproduction Method]

Both of writing (recording) and reading (reproduction) of information to or from the optical recording medium of the present exemplary embodiment are performed by light irradiation.

Upon recording information, a beam of light capable of generating a chemical change in the photosensitive compound (C), for example, when the photosensitive compound (C) is a polymerizable monomer, the change would be polymerization and concentration change thereof, is used as the object light (also referred to as recording light).

In particular, in the optical recording medium of the present exemplary embodiment, because information is recorded in the form of a volume hologram, the recording layer is irradiated with the object light along with the reference light so as to allow the object light and reference light to interfere with each other at the recording layer. The resultant interfering light causes a change of the photosensitive compound (C) (for example, when the photosensitive compound (C) is a polymerizable monomer, the change would be polymerization and concentration change thereof) in the recording layer. As a result, interference stripes develop refractive index difference in the recording layer, whereby the information is recorded in the form of a hologram in the recording layer by the interference stripes that are recorded in the recording layer.

On the other hand, when the volume hologram recorded in the recording layer is reproduced, the recording layer is irradiated with a predetermined reproduction light (usually, the reference light). The reproduction light generates diffractions in accordance with the interference stripes. The diffracted light carries the same information as the information recorded in the recording layer, so that the information recorded in the recording layer is reproduced by reading the diffracted light with an appropriate detection unit.

The wavelength of the object light, reproduction light and reference light is in any region respectively in accordance with the use thereof and may be in either a visible region or an ultraviolet region. Preferred examples of these rays of light may include a laser or the like that has excellent monochromaticity and directionality, including a solid laser such as ruby, glass, Nd-YAG, or Nd-YVO$_4$; a diode laser such as GaAs, InGaAs, or GaN; a gas laser such as helium-neon, argon, krypton, excimer, or $CO_2$; and a dye laser having dyes.

The irradiation dose of the object light, reproduction light and reference light has no limitation and is determined optionally within the range where recording and reproduction are attainable. However, when the irradiation dose is extremely small, possibly heat resistance and mechanical properties of the recording layer are not fully exhibited because the chemical change of the photosensitive compound (C) is too incomplete. On the other hand, when the irradiation dose is extremely large, possibly the components (the volume hologram recording material according to the present invention) of the recording layer are degraded.

Therefore, the irradiation dose of the object light, reproduction light and reference light is in the range of usually 0.1 J/cm$^2$ or more and 20 J/cm$^2$ or less, in accordance with the composition of the volume hologram recording material of the present invention used for forming the recording layer, the amount and kind of the polymerization initiator, and the like.

Examples

Hereinafter, the present invention will be further described in detail with reference to the following examples. However, within the scope of the present invention, it should be construed that the present invention is in no way limited to those examples. Note that the term "part(s)" in the following description denotes "part(s) by weight" unless otherwise mentioned.

[Example 1]

In a sample bottle 1, 5.25 g of an addition compound (having an isocyanate group content of 20.8%) of a trimer of hexamethylene diisocyanate and 2-ethylhexanol as the polyisocyanate (A1), 1.11 g of paracumylphenol EO modified (n ≈ 1) acrylate as the photosensitive compound (C) and 0.056 g of bis($\eta^5$-2,4-cyclopentadien-1-yl)-bis(2,6-difluoro-3-(1H-py rrol-1-yl)-phenyl) titanium as the photo-polymerization initiator were weighed and stirred until each component was dissolved.

Then, in a sample bottle 2, 4.75 g of polycaprolactone triol having a molecular weight of 500 as the polyol (A2) and 0. 004 g of dioctyltin dilaurate were weighed and stirred until each component was dissolved.

After that, the sample bottle 1 and the sample bottle 2 were put in a bell jar and deaerated for 3 hours under vacuum, and then the liquids in the sample bottle 1 and the sample bottle 2 were mixed and stirred, and further deaerated for several minutes under vacuum in the bell jar.

Subsequently, the resultant liquid was cast on a slide glass having a 500 $\mu$m thick Teflon (registered trademark) spacer sheet on the both ends thereof; the liquid cast on the slide glass was further covered with another slide glass; after the periphery of the resultant assembly was fixed with clips, the assembly was heated at 60°C for 15 hours to prepare a recording layer. Note that green laser was used for hologram recording.

[Example 2]

Similarly to Example 1, in a sample bottle 1, 5.19 g of an addition compound (having an isocyanate group content of 20.8%) of a trimer of hexamethylene diisocyanate and 2-ethylhexanol as the polyisocyanate (A1), 1.67 g of bisphenol F EO modified (n ≈ 2) diacrylate as the photosensitive compound (C) and 0.083 g of bis($\eta^5$-2,4-cyclopentadien-1-yl)-bis(2,6-difluoro-3-(1H-py rrol-1-yl)-phenyl) titanium as the photo-polymerization initiator were weighed and stirred until each component was dissolved.

Then, in a sample bottle 2, 9.81 g of polycarbonate diol having a molecular weight of 800 as the polyol (A2) and 0. 003 g of dioctyltin dilaurate were weighed and stirred until each component was dissolved.
Subsequently, a recording layer was prepared by an operation similar to that in Example 1. Note that green laser was used for hologram recording.

[Example 3]

Similarly to Example 1, in a sample bottle 1, 2.18 g of hexamethylene diisocyanate as the polyisocyanate (A1), 1.11 g of bisphenoxyethanol fluorenediacrylate as the photosensitive compound (C) and 0.056 g of bis($\eta^5$-2,4-cyclopentadien-1-yl)-bis(2,6-difluoro-3-(1H-py rrol-1-yl)-phenyl) titanium as the photo-polymerization initiator were weighed and stirred until each component was dissolved.
Then, in a sample bottle 2, 4.50 g of polycaprolactone triol having a molecular weight of 500 as the polyol (A2) and 0.002 g of dioctyltin dilaurate were weighed and stirred until each component was dissolved. Subsequently, a recording layer was prepared by an operation similar to that in Example 1. Note that green laser was used for hologram recording.

[Example 4]

Similarly to Example 1, in a sample bottle 1, 5.25 g of an addition compound (having an isocyanate group content of 20.8%) of a trimer of hexamethylene diisocyanate and 2-ethylhexanol as the polyisocyanate (A1), 1.11 g of tribromophenyl acrylate as the photosensitive compound (C) and 0.056 g of bis(2,4,6-trimethylbenzoil)-phenylphosphine oxide as the photo-polymerization initiator were weighed and stirred until each component was dissolved.
Then, in a sample bottle 2, 4.75 g of polycaprolactone triol having a molecular weight of 500 as the polyol (A2) and 0.002 g of dioctyltin dilaurate were weighed and stirred until each component was dissolved.
Subsequently, a recording layer was prepared similarly to Example 1. Note that blue laser was used for hologram recording. The obtained recording layer had a transmission of 63% at a wavelength of 405 nm.

[Example 5]

In a sample bottle 1, 2.64 g of an addition compound (having an isocyanate group content of 20.8%) of a trimer of hexamethylene diisocyanate and 2-ethylhexanol as the polyisocyanate (A1), 0.22 g of N-vinylcarbazole as the photosensitive compound (C) and 0.022 g of bis(2,4,6-trimethylbenzoyl)-phenylphosphine oxide as the photo-polymerization initiator were weighed and stirred until each component was dissolved.
Then, in a sample bottle 2, 4.36 g of trifunctional polypropylene triol having a molecular weight of 1, 000 as the polyol (A2), 0.31 g of polyalkylene glycol-modified silicone SS 2802 (manufactured by Dow Corning Toray Co., Ltd.) and 0.001 g of dioctyltin dilaurate were weighed and stirred until each component was dissolved.
After that, the sample bottle 1 and the sample bottle 2 were put in a bell jar and deaerated for 3 hours under vacuum, and then the liquids in the sample bottle 1 and the sample bottle 2 were mixed and stirred, and further deaerated for several minutes under vacuum in the bell jar. The resultant liquid was cast on a slide glass having a 500 $\mu$m thick Teflon (registered trademark) spacer sheet on the both ends thereof; the liquid cast on the slide glass was further covered with another slide glass; after the periphery of the resultant assembly was fixed with clips, the assembly was heated at 60°C for 15 hours to prepare a recording layer. Note that blue laser was used for hologram recording. The obtained recording layer had a transmission of 62% at a wavelength of 405 nm.

[Example 6]

Similarly to Example 1, in a sample bottle 1, 1.44 g of an addition compound (having an isocyanate group content of 20.8%) of a trimer of hexamethylene diisocyanate and 2-ethylhexanol as the polyisocyanate (A1), 0.155 g of N-vinylcarbazole as the photosensitive compound (C) and 0.015 g of bis(2,4,6-trimethylbenzoyl)-phenylphosphine oxide as the photo-polymerization initiator were weighed and stirred until each component was dissolved.
Then, in a sample bottle 2, 3.56 g of (bifunctional) polypropylene glycol having a molecular weight of 1,000 as the polyol (A2) and 0.002 g of dioctyltin dilaurate were weighed and stirred until each component was dissolved.
Subsequently, a recording layer was prepared similarly to Example 1. Note that blue laser was used for hologram recording.

[Example 7]

In a sample bottle, 10.0 g of an epoxy compound obtained by reacting polytetramethylene glycol having a molecular weight of 1,000 and epichlorohydrin as the epoxy compound having two or more epoxy groups in one molecule (B1), 0.10 g of SUNAID SI-60 (manufactured by Sanshin Chemical Industry Co., Ltd.) as the curing agent (B2), 1.11 g of paracumylphenol EO modified acrylate (n ≈ 1) as the photosensitive compound (C) and 0.056 g of bis(2,4,6-trimethylbenzoyl)-phenylphosphine oxide as the photo-polymerization initiator were weighed and stirred until each component was dissolved.

Then, the mixed liquid was cast on a slide glass having a 500 μm thick Teflon (registered trademark) spacer sheet on both ends thereof; the liquid cast on the slide glass was further covered with another slide glass; the periphery of the resultant assembly was fixed with clips; and the assembly was heated at 60°C for 15 hours to prepare a recording layer. Note that blue laser was used for hologram recording.

[Comparative Example 1]

Similarly to Example 1, in a sample bottle 1, 6.96 g of an addition compound of a trimer of hexamethylene diisocyanate and 2-ethylhexanol as the polyisocyanate (A1), 1.67 g of paracumylphenol EO modified (n ≈ 1) acrylate as the photosensitive compound (C) and 0.083 g of bis($\eta^5$-2,4-cyclopentadien-1-yl)-bis(2,6-difluoro-3-(1H-py rrol-1-yl)-phenyl) titanium as the photo-polymerization initiator were weighed and stirred until each component was dissolved.

Then, in a sample bottle 2, 8.04 g of polypropylene glycol based triol having a molecular weight of 700 as the polyol (A2) and 0.008 g of dioctyltin dilaurate were weighed and stirred until each component was dissolved.

Subsequently, a recording layer was prepared similarly to Example 1. Note that green laser was used for hologram recording.

[Comparative Example 2]

A recording layer was prepared by performing the procedure similar to Example 5, except that, among the compounds that were mixed in the sample bottle 2, the silicone compound SS-2802 was not used. Note that blue laser was used for hologram recording.

[Comparative Example 3]

A recording layer was prepared by performing the similar procedure to Example 5, except that the polytetramethylene glycol having a molecular weight of 1,000 as the epoxy compound (B1) having two or more epoxy groups in one molecule used in Example 5 was replaced by polypropylene glycol. Note that blue laser was used for hologram recording.

<Moisture Absorption Rate>

On a glass which was fluorine treated and having 500 μm thick Teflon (registered trademark) spacer sheets on the both ends, the composition liquid was cast as described in the above-described examples. A slide glass was further put on the composition liquid cast on the glass. The periphery of the resultant assembly was fixed with clips. Then the assembly was heated at 60 °C for 15 hours to prepare a recording layer. The recording layer was peeled off from the glass immediately after heating and cut into a piece in 5 cm × 5 cm size. After that, immediately, the weight of the piece (Wl, measured at 23°C and 50% RH) was measured. From the weight (W2) that was measured immediately after the piece was left for 24 hours in an environment of 60°C and 90% RH, the moisture absorption rate (%) was calculated as [(W2)-(W1)/ W1]×100 (unit: %). The results of the measurement are shown in Table 1.

<Compatibility>

The transparency of the obtained recording layers was evaluated by visual inspection in accordance with the following criteria.

Good: transparency was good, and
Poor: transparency was poor.

The results are shown in Table 1.

<Hologram Recording>

Using the above-described samples of the volume hologram recording material, hologram recording was performed in the procedure described below so as to evaluate whether recording was performed properly or not in accordance with the following criteria. The results are shown in table 1.

Good: writing or reproduction of records was performed properly, and
Poor: writing or reproduction of records was performed improperly.

The measurement was made on the following items: (i) whether writing of records was performed properly or not immediately after the samples were prepared; (ii) whether writing of records was performed properly or not after the samples absorbed moisture (at 60°C and 90% RH for 72 hours) (shelf life) ; and (iii) whether reproduction of records was performed properly or not after the samples absorbed moisture (at 60°C and 90% RH for 72 hours) after writing of records was performed immediately after the samples were prepared (archival life).

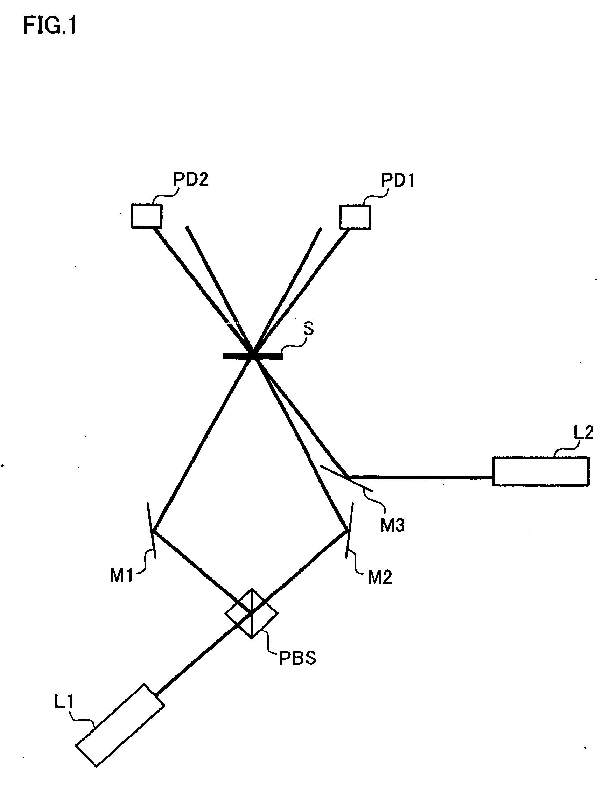

FIG. 1 is a schematic view of an apparatus used for hologram recording. In FIG. 1, S indicates a sample of a volume hologram recording material; each of M1 to M3 indicates a mirror; PBS indicates a polarized beam splitter; L1 indicates a laser light source that emits a recording light with a wavelength of 532 nm; L2 indicates a laser light source that emits a reproduction light with a wavelength of 633 nm; and PD1 and PD2 indicate photodetectors.

As the light source for hologram recording, VERDI-V2 indicated by L1 in the figure manufactured by Coherent Corp. was used, which generates a 532 nm wavelength green laser light by exciting an Nd:$YVO_4$ crystal with a diode and further using a non-linear optical crystal LBO (note that, in the case of using blue laser, a single mode laser diode manufactured by SONY Corp. was used, which generates an around 405 nm wavelength light).

As shown in FIG. 1, a 532 nm light beam was split with the polarized beam splitter (indicated by "PBS" in the figure), and resultant two beams were crossed on a recording face at an angle of 50.00 degrees. At this time, irradiation was performed in a manner that the bisector of the angle between the two beams was oriented perpendicularly to the recording face and that the vibration plane of the electric field vector formed by the two beams obtained by splitting was oriented perpendicularly to the plane that involves the two crossing beams therein.

After a hologram was recorded, the recording face was irradiated with the light emitted from V05-LHP151 (manufactured by Melles Griot Corp., indicated by "L2" in the figure) capable of generating a 633 nm light with He-Ne laser at an angle of 30.19 degrees with respect to the recording face; and the resultant diffracted light was detected with a power meter and a detector (2930-C and 918-SL manufactured by Newport Corp., indicated by "PD1" and "PD2" in the figure, respectively) so as to evaluate whether hologram recording was performed properly or not. The hologram diffraction efficiency was given by the ratio of the diffracted light intensity to the incident light intensity.

[Table 1]

| | | EXAMPLES | | | | | | | COMPARATIVE EXAMPLES | | |
|---|---|---|---|---|---|---|---|---|---|---|---|
| | | 1 | 2 | 3 | 4 | 5 | 6 | 7 | 1 | 2 | 3 |
| Moisture Absorption Rate | % | 1.3 | 1.2 | 1.3 | 1.3 | 1.1 | 1.2 | 1.3 | 1.9 | 1.7 | 2.0 |
| Compatibility | Visual inspection | Good | Good | Good | Good | Good | Good | Good | Good | Good | Good |
| Hologram Recording | (i) | Good | Good | Good | Good | Good | Good | Good | Good | Good | Good |
| | (ii) | Good | Good | Good | Good | Good | Good | Good | Poor | Poor | Poor |
| | (iii) | Good | Good | Good | Good | Good | Good | Good | Poor | Poor | Poor |

(Hologram Recording)

(i) whether writing of records was performed properly or not immediately after the samples were prepared

(ii) whether writing of records was performed properly or not after the samples absorbed moisture (shelf life)

(iii) whether reproduction of records was performed properly or not after the samples absorbed moisture after writing of records was performed immediately after the samples were prepared (archival life).

[Evaluation Results]

As shown in Table 1, the recording layers prepared in Example 1 to Example 7 are low in the moisture absorption rate and exhibit excellent compatibilities.
In addition, regarding hologram recording of the volume hologram optical recording media having these recording layers, all of the items including (1) whether writing of records was performed properly or not immediately after the samples were prepared; (2) whether writing of records was performed properly or not after the samples absorbed moisture (shelf life); and (3) whether reproduction of records was performed properly or not after the samples absorbed moisture after writing of records was performed immediately after the samples were prepared (archival life) show that the hologram recording was performed properly.

On the other hand, the volume hologram optical recording media having the recording layers prepared in Comparative Example 1 to Comparative Example 3 show that the hologram recording was performed properly regarding the item of (1) whether writing of records was performed properly or not immediately after the samples were prepared. However, they show that record reproduction properties did not work properly regarding the items of (2) whether writing of records was performed properly or not after the samples absorbed moisture (shelf life); and (3) whether reproduction of records was performed properly or not after the samples absorbed moisture after writing of records was performed immediately after the samples were prepared (archival life).

Industrial Applicability

The composition for forming the volume hologram recording layer and the volume hologram recording material using the composition, to which the present invention is applied, are suitably used in applications such as volume hologram optical recording media.

Brief Description of the Drawings

[FIG. 1] A schematic view of an apparatus used for hologram recording

Description of Reference Numerals and Signs

S... sample, M1, M2, M3... mirrors, PBS... polarized beam splitter, L1... laser light source that emits a recording light, L2... laser light source that emits a reproduction light, PD1, PD2... photodetectors

**Claims**

1.  A volume hologram optical recording medium, comprising:

    a multi-layer structure having at least a transparent substrate and a recording layer composed by containing a synthetic resin,
    wherein three-dimensional information recording is performed with interference stripes formed in the recording layer by being irradiated with a plurality of coherent lights, and
    a moisture absorption rate of the recording layer formed is 1.5 wt% or less. When measured over 24h in accordance with the moisture absorption rate measurement procedure in the description.

2.  The volume hologram optical recording medium according to claim 1, wherein the recording layer includes a resin matrix (A) and/or a resin matrix (B) and a photosensitive compound (C),
    the resin matrix (A) is obtained by reacting a polyisocyanate (A1) with a polyol (A2) having -(C=O)O-group and/or -O(C=O)O- group, and
    the resin matrix (B) is obtained by reacting an epoxy compound (B1) having two epoxy groups or more in one molecule with a curing agent (B2).

3.  The volume hologram optical recording medium according to claim 2, wherein the polyisocyanate (A1) has three isocyanate groups or more in one molecule.

4.  The volume hologram optical recording medium according to claim 2 or 3, wherein the epoxy compound (B1) has an alkylene oxide having from 4 carbon atoms to 10 carbon atoms.

5.  The volume hologram optical recording medium according to any one of claims 2 to 4, wherein the curing agent (B2) is at least any one kind selected from a group containing amines, acid anhydrides, thiols, anion polymerization initiators and cation polymerization initiators.

6.  The volume hologram optical recording medium according to any one of claims 2 to 5, wherein the photosensitive compound (C) is a radical polymerizable monomer.

7.  The volume hologram optical recording medium according to any one of claims 2 to 6, wherein the ratio of the photosensitive compound (C) is from 0.5 parts by weight to 100 parts by weight, with respect to 100 parts by weight of either the resin matrix (A) or the resin matrix (B), or with respect to 100 parts by weight of a total amount ((A) + (B)) of the resin matrix (A) and the resin matrix (B).

8.  A composition for forming a volume hologram recording layer used for a volume hologram optical recording medium, wherein the composition comprises:

    100 parts by weight of a synthetic resin containing a resin matrix (A) and/or a resin matrix (B);
    from 0.5 parts by weight to 100 parts by weight of a photosensitive compound (C),
    wherein the resin matrix (A) is obtained by reacting a polyisocyanate (A1) with a polyol (A2) having -(C=O)O- group and/or -O(C=O)O- group, and

the resin matrix (B) is obtained by reacting an epoxy compound (B1) having two epoxy groups or more in one molecule with a curing agent (B2), and wherein

a 500 µm thick recording layer formed on a substrate and made from the composition, after peeling off therefrom followed by saturating with moisture in an environment of 60 °C and 90 %RH has a moisture absorption rate of 1.5 wt.-% or less with respect to the initial weight.

9. A volume hologram recording material comprising at least the composition for forming the volume hologram recording layer according to claim 8.

10. A volume hologram optical recording method, comprising;
irradiating the recording layer of the volume hologram optical recording according to claim 1 with an excitation light and a reference light, and
recording a volume hologram in the recording layer by the interference of the excitation light and the reference light.

**Patentansprüche**

1. Optisches Volumenhologramm-Aufzeichnungsmedium, das folgendes umfasst:

eine Mehrschichtstruktur, die mindestens ein transparentes Trägermaterial und eine Aufzeichnungsschicht, die durch ein darin enthaltenes synthetisches Harz aufgebaut ist, aufweist,
wobei eine dreidimensionale Informationsaufzeichnung mit Interferenzstreifen, die in der Aufzeichnungsschicht durch Bestrahlen mit einer Vielzahl von kohärenten Lichtern gebildet werden, durchgeführt wird und
ein Feuchtigkeitsabsorptionsanteil der gebildeten Aufzeichnungsschicht 1,5 Gew.% oder weniger ist, wenn er über 24 Stunden im Einklang mit dem Feuchtigkeitsabsorptionsanteil-Messungsverfahren gemäß der Beschreibung bestimmt wird.

2. Optisches Volumenhologramm-Aufzeichnungsmedium gemäß Anspruch 1, worin die Aufzeichnungsschicht eine Harzmatrix (A) und/oder eine Harzmatrix (B) und eine lichtempfindliche Verbindung (C) einschließt,
die Harzmatrix (A) durch Reaktion eines Polyisocyanats (A1) mit einem Polyol (A2) mit einer -(C=O)O-Gruppe und/oder einer -O(C=O)O-Gruppe erhalten wird und
die Harzmatrix (B) durch Reaktion einer Epoxyverbindung (B1) mit zwei Epoxygruppen oder mehr in einem Molekül mit einem Härter (B2) erhalten wird.

3. Optisches Volumenhologramm-Aufzeichnungsmedium gemäß Anspruch 2, worin das Polyisocyanat (A1) drei Isocyanatgruppen oder mehr in einem Molekül aufweist.

4. Optisches Volumenhologramm-Aufzeichnungsmedium gemäß Anspruch 2 oder 3, worin die Epoxyverbindung (B1) ein Alkylenoxid mit 4 bis 10 Kohlenstoffatomen aufweist.

5. Optisches Volumenhologramm-Aufzeichnungsmedium gemäß irgendeinem der Ansprüche 2 bis 4, worin der Härter (B2) mindestens einer ist, der ausgewählt ist aus einer Gruppe, die Amine, Säureanhydride, Thiole, anionische Polymerisationsstarter und kationische Polymerisationsstarter enthält.

6. Optisches Volumenhologramm-Aufzeichnungsmedium gemäß irgendeinem der Ansprüche 2 bis 5, worin die lichtempfindliche Verbindung (C) ein radikalisch polymerisierbares Monomer ist.

7. Optisches Volumenhologramm-Aufzeichnungsmedium gemäß irgendeinem der Ansprüche 2 bis 6, worin der Anteil der lichtempfindlichen Verbindung (C) von 0,5 Gew.-Teilen bis 100 Gew.-Teile, bezogen auf 100 Gew.-Teile von entweder der Harzmatrix (A) oder der Harzmatrix (B) ist, oder bezogen auf 100 Gew.-Teile der Gesamtmenge ((A) + (B)) der Harzmatrix (A) und der Harzmatrix (B).

8. Zusammensetzung zur Bildung einer Volumenhologramm-Aufzeichnungsschicht, die für ein optisches Volumenhologramm-Aufzeichnungsmedium verwendet wird, worin die Zusammensetzung folgendes umfasst:

100 Gew.-Teile eines synthetischen Harzes, das eine Harzmatrix (A) und/oder eine Harzmatrix (B) enthält;
0,5 Gew.-Teile bis 100 Gew.-Teile einer lichtempfindlichen Verbindung (C),
worin die Harzmatrix (A) durch Reaktion eines Polyisocyanats (A1) mit einem Polyol (A2) mit einer -(C=O)O-Gruppe und/oder einer -O(C=O)O-Gruppe erhalten wird und

die Harzmatrix (B) durch Reaktion einer Epoxyverbindung (B1) mit zwei Epoxygruppen oder mehr in einem Molekül mit einem Härter (B2) erhalten wird und worin

eine 500 μm dicke Aufzeichnungsschicht, die auf einem Trägermaterial aus der Zusammensetzung gebildet ist, nach dem Abschälen davon, gefolgt von einer Feuchtigkeitssättigung in einer Umgebung von 60°C und 90 % relativer Luftfeuchtigkeit, einen Feuchtigkeitsabsorptionsanteil von 1,5 Gew.% oder weniger, bezogen auf das anfängliche Gewicht, aufweist.

9. Volumenhologramm-Aufzeichnungsmaterial, das mindestens die Zusammensetzung zur Bildung der Volumenhologramm-Aufzeichnungsschicht gemäß Anspruch 8 umfasst.

10. Optisches Volumenhologramm-Aufzeichnungsverfahren, das folgendes umfasst:

Bestrahlen der Aufzeichnungsschicht des optischen Volumenhologramm-Aufzeichnungsmediums gemäß Anspruch 1 mit einem Anregungslicht und einem Referenzlicht und

Aufzeichnen eines Volumenhologramms in der Aufzeichnungsschicht durch die Interferenz des Anregungslichts und des Referenzlichts.

**Revendications**

1. Support d'enregistrement optique pour hologramme volumique, comprenant :

une structure à plusieurs couches ayant au moins un substrat transparent et une couche d'enregistrement composée en contenant une résine synthétique,

dans lequel l'enregistrement d'informations tridimensionnelles est effectué par des franges d'interférence formées dans la couche d'enregistrement en étant irradiée par une pluralité de lumières cohérentes, et

un taux d'absorption d'humidité de la couche d'enregistrement formée est de 1,5 % en poids ou moins, lorsque mesuré sur plus de 24 heures selon la procédure de mesure de taux d'absorption d'humidité dans la description.

2. Support d'enregistrement optique pour hologramme volumique selon la revendication 1, dans lequel la couche d'enregistrement inclut une matrice de résine (A) et/ou une matrice de résine (B) et un composé photosensible (C), la matrice de résine (A) est obtenue en faisant réagir un polyisocyanate (A1) avec un polyol (A2) ayant un groupe -(C=O)O- et/ou un groupe -O(C=O)O-, et

la matrice de résine (B) est obtenue en faisant réagir un composé époxy (B1) ayant deux groupes époxy ou plus dans une seule molécule avec un agent de cuisson (B2).

3. Support d'enregistrement optique pour hologramme volumique selon la revendication 2, dans lequel le polyisocyanate (A1) a trois groupes isocyanate ou plus dans une seule molécule.

4. Support d'enregistrement optique pour hologramme volumique selon la revendication 2 ou 3, dans lequel le composé époxy (B1) a un oxyde d'alkylène ayant de 4 atomes de carbone à 10 atomes de carbone.

5. Support d'enregistrement optique pour hologramme volumique selon l'une quelconque des revendications 2 à 4, dans lequel l'agent de cuisson (B2) est au moins n'importe quelle sorte sélectionnée à partir d'un groupe constitué par des amines, des anhydrides acides, des thiols, des initiateurs de polymérisation anionique et des initiateurs de polymérisation cationique.

6. Support d'enregistrement optique pour hologramme volumique selon l'une quelconque des revendications 2 à 5, dans lequel le composé photosensible (C) est un monomère pouvant être polymérisé par radicaux.

7. Support d'enregistrement optique pour hologramme volumique selon l'une quelconque des revendications 2 à 6, dans lequel le rapport du composé photosensible (C) va de 0,5 partie en poids à 100 parties en poids, par rapport à 100 parties en poids de la matrice de résine (A) ou de la matrice de résine (B), ou par rapport à 100 parties en poids d'une quantité totale ((A) + (B)) de la matrice de résine (A) et de la matrice de résine (B).

8. Composition pour former une couche d'enregistrement pour hologramme volumique utilisée pour un support d'enregistrement optique pour hologramme volumique, dans laquelle la composition comprend :

100 parties en poids d'une résine synthétique contenant une matrice de résine (A) et/ou une matrice de résine (B) ;
de 0,5 partie en poids à 100 parties en poids d'un composé photosensible (C),
dans laquelle la matrice de résine (A) est obtenue en faisant réagir un polyisocyanate (A1) avec un polyol (A2) ayant un groupe -(C=O)O- et/ou un groupe -O(C=O)O-, et
la matrice de résine (B) est obtenue en faisant réagir un composé époxy (B1) ayant deux groupes époxy ou plus dans une seule molécule avec un agent de cuisson (B2), et dans lequel
une couche d'enregistrement de 500 $\mu$m d'épaisseur formée sur un substrat et faite à partir de la composition, après détachement de celui-ci, suivi par une saturation avec de l'humidité dans un environnement à 60 °C et 90 % de HR a un taux d'absorption d'humidité de 1,5 % en poids ou moins par rapport au poids initial.

9. Matière d'enregistrement pour hologramme volumique comprenant au moins la composition pour former la couche d'enregistrement pour hologramme volumique selon la revendication 8.

10. Procédé d'enregistrement optique d'hologramme volumique, comprenant :

l'irradiation de la couche d'enregistrement du support d'enregistrement optique pour hologramme volumique selon la revendication 1 par une lumière d'excitation et une lumière de référence, et
l'enregistrement d'un hologramme volumique dans la couche d'enregistrement par l'interférence de la lumière d'excitation et de la lumière de référence.

FIG.1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 3737306 B
- JP 3645480 B
- JP 2005043862 A
- JP 2005502918 W
- US 20060115740 A1
- JP 2001220526 A
- JP 2001310937 A
- JP 59152396 A
- JP 61151197 A
- JP 5241338 A
- JP 2000069 A
- JP 2055446 A
- JP 2030321 A
- JP 6116313 A
- JP 47002528 A
- JP 2000010277 A
- JP 2002362326 A
- JP 2004198446 A
- JP 2004252421 A
- JP 2004212958 A
- JP 2002169282 A
- JP 2004191938 A
- JP 2002268239 A
- JP 2005162415 A

### Non-patent literature cited in the description

- **Junpei Tujiuchi.** HOLOGRAPHIC DISPLAY. Sangyo Tosho